# EUROPÄISCHE PATENTSCHRIFT

(11) **EP 1 116 749 B1**
(45) Veröffentlichungstag und Bekanntmachung des Hinweises auf die Patenterteilung: **24.05.2006**
(21) Anmeldenummer: 00128569.1
(22) Anmeldetag: 27.12.2000
(51) Int. Cl.: C08L 67/02, C08K 3/00

(54) **Bastelvergussmasse**
Composition for toy mouldings
Composition pour le moulage de jouets

(30) Priorität: 12.01.2000 DE 10000957
(43) Veröffentlichungstag der Anmeldung: 18.07.2001
(73) Patentinhaber: Tyco Electronics Jordan GmbH & Co. KG, D-12249 Berlin (DE)
(72) Erfinder: Schulz, Barbara, Dipl. Ing., 14806 Mörz (DE); Beer, Alexander, Dr., 14129 Berlin (DE)
(74) Vertreter: Strych, Werner Maximilian Josef

(56) Entgegenhaltungen:
- EP-A- 0 181 441
- EP-A- 0 356 715
- EP-A- 0 573 842
- EP-A- 0 787 768
- DE-A- 2 424 451
- DE-A- 2 515 757
- DE-A- 3 238 232

## Beschreibung

Die vorliegende Erfindung betrifft die Verwendung einer weichelastischen, aus zwei Komponenten bestehenden Masse.

Massen, die für Bastelzwecke eingesetzt werden, sollten nicht gesundheitsschädlich sein, da sie auch von Kindern verwendet und eventuell in den Mund genommen werden. Da die Beachtung von Arbeitssicherheit und Arbeitshygiene beim Basteln von Kindern nicht vorausgesetzt werden kann, sollten nur solche Bastelmassen verwendet werden, die nach der GefStoffV nicht kennzeichnungspflichtig sind und für die keine R- und S-Sätze gelten.

Aus der DE-A-42 25 665 ist eine Modelliermasse bekannt, die aus Fango-Erde, Wachs, anorganischen Pigmenten, Füllstoffen und Emulgatoren besteht. Gemäß diesem Stand der Technik sollen die knetbaren Modelliermassen nach der Verarbeitung aushärten und anfällig gegen Beschädigung sein.

In der DE-A-198 17 956 wird ein Spielzeug offenbart, das aus einem nachwachsenden Rohstoff durch Extrudieren, Pressen oder Spritzgießen hergestellt wird. Dem nachwachsenden Rohstoff als Hauptbestandteil sollen Polyvinylalkohol und Wasser sowie Backpulver zugesetzt werden, wodurch die Elemente an der Oberfläche durch einfaches Anfeuchten klebrig gemacht und somit die Bauelemente zu größeren Einheiten zusammengesetzt werden können.

Die DE-A-689 22 460 beschreibt eine als Spielzeug verwendbare thermoplastische Polymerzusammensetzung, die aus Blockcopolymeren, welche sich aus vinylaromatischen Kohlenwasserstoffen und Polyphenylestern zusammensetzen, besteht und hinsichtlich Schlagzähigkeit, Oberflächenhärte und Wärmebeständigkeit sehr gute Eigenschaften aufweisen soll. Die beschriebenen Massen werden im Spritzgussverfahren bei 250 °C industriell verarbeitet.

Die DE-A-29 37 843, DE-A-32 38 232 und DE-A-40 08 980 beschreiben Knet-, Modellier- und Formmassen auf der Basis natürlicher oder synthetischer Rohstoffe wie Maisstärke, Kartoffelstärke, Ceresinwachs, Celluloseether, PVC, wässriges Polyvinylacetat oder -copolymere, wässrige Polyacrylsäure oder - copolymere und Polyalkylmethacrylat, die teilweise durch Wärme, teilweise an der Luft trocknend gehärtet werden. Vom gleichen Patentinhaber wird in der DE 44 46 140 eigens ein separates Verfahren zum Aushärten, Trocknen oder Backen solcher Modelliermassen bei Temperaturen von vorzugsweise +60 °C bis + 180 °C beschrieben.

In der DE 43 27 963 wird ein Verfahren zur Herstellung eines unter Druck verformbaren Harzes beschrieben, welches 40 % eines Silikongummis und 58 % eines festen Füllstoffes (Siliciumoxid) enthält. Das Material muss zur Verarbeitung in der Wärme geschmolzen und 20 Minuten gerührt werden. Zur Verformung wird die Masse anschließend in kochendem Wasser erwärmt.

Aus der EP-A-0573842 ist eine Zwei-Komponenten-Kabelvergussmasse bekannt, die insbesondere als Füllmasse zum Füllen von Kabelzubehören und Kabelverbindungsmuffen bzw. Hausanschlussmuffen für erdverlegte Starkstromkabel mit Nennspannungen von 1 KV, zum Füllen der Innenräume von Zubehörteilen, von Anschlussmuffen, Spulenkästen und Endverschlüssen sowie zum Füllen des Raumes zwischen Innenmuffen und Schutzmuffen für Starkstromkabel mit Bleimetallmantel benötigt werden.

Die EP-A-0787768 beschreibt eine in der Wärme und/oder Kälte vernetzbare Zwei-Komponenten-Kabelvergussmasse mit zumindest einer Bindemittelkomponente und einer Füllstoffkomponente, die als Füllmassen zum Füllen von Kabelzubehören, Kabelverbindungsmuffen und elektronischen Baugruppen verwendet werden.

In der EP-A-0181441 sind in der Wärme vernetzbare Massen und Verfahren zur Herstellung von in der Kälte vernetzenden Massen offenbart, wobei die Massen Reaktionsprodukte von zwei Komponenten A und B und die Komponenten A und B jeweils funktionalisierte flüssige Polydiene sind.

Die EP-A-0356715 beschreibt Produkte, die aus zwei Komponenten bestehen und ein in der Wärme und/oder Kälte vemetzbares Reaktionsprodukt von zwei Komponenten (Polymere A und Polymere B) sind. Die bekannten vorgelierbaren Klebstoff finden ihren Einsatz beim Verbinden von Blechen mit vulkanisationsstabilen Kunststoffen und/oder mit sich selbst im Automobilbau.

Die handelsüblichen Bastel- und Spielzeugmassen sind, wie anhand der obigen Beispiele gezeigt, entweder dauerhaft plastisch, also nicht wirklich formbeständig, oder härten vollständig aus und sind nicht mehr elastisch. Aufgrund ihrer fehlenden Elastizität sind Gegenstände aus solchen Materialien nicht bruchfest und daher nur bedingt als Spielzeug geeignet, oder nur in der Wärme verarbeitbar und dadurch für Kinder ungeeignet oder gefährlich oder im Endzustand nicht wasserfest.

Aufgabe der vorliegenden Erfindung ist es daher, die Verwendung einen Bastelvergussmasse bereit zu stellen, die die vorstehenden Probleme überkommt, also bei Raumtemperatur vulkanisiert und im Endzustand wasserfest und -beständig sowie weichelastisch ist, sowie einen Bastelkit.

Erfindungsgemäß wird diese Aufgabe durch die Ansprüche 1 und 10 gelöst. Bevorzugte Weiterentwicklungen sind den abhängigen Unteransprüchen zu entnehmen.

Gemäß der Erfindung ist die in Wärme und/oder Kälte vernetzbare Bastelvergussmasse das Reaktionsprodukt einer A-Komponente mit einer B-Komponente. Die A-Komponente besteht aus einem funktionalisierten Öl als Bindemittel, einem Streckmittel und ggf. einem Füllstoff und/oder einem Farbstoff, die B-Komponente aus einem funktionalisierten, d. h. vulkanisierbaren Kautschuköl sowie einem Streckmittel und ggf. Füllstoff und/oder einem Farbstoff.

Die erfindungsgemäß verwendeten Massen vereinigen dabei die folgenden wünschenswerten Eigenschaften, nämlich Erreichen des formbeständigen Endzustandes bei Raumtemperatur, eines elastischen, weichen Endzustandes, gesundheitliche Unbedenklichkeit der Komponenten und ihrer Mischungen sowie sehr gute Haftung der verfestigten Masse auf glatten Oberflächen ohne den Zusatz von Hilfsstoffen wie Klebern, Haftvermittlern, Flüssigkeiten und dgl..

Überdies unterliegen die erfindungsgemäß verwendete Bastelvergussmasse und ihre Einzelkomponenten keiner Kennzeichnungspflicht und haben keine R- und S-Sätze. Die vulkanisierte Masse hat - wie vorstehend bereits beschrieben - ohne jeden Zusatz von Hilfsstoffen wie Klebern, Haftvermittlern, Flüssigkeiten und dgl. eine sehr gute Haftung auf glatten Oberflächen. Da diese Haftung durch Adhäsion erfolgt, ist die Masse von den Flächen wieder leicht und rückstandslos zu entfernen. Die Masse kann dabei Füllstoffe enthalten oder ungefüllt verwendet werden. Die ungefüllte Masse ist - je nach Farbgebung - transparent oder transluzent, wodurch sie insbesondere auch für die Herstellung von Fenster-Klebebildem und ähnlichen Dekorationsartikeln oder auch als Eingießmasse, also zum Einbetten von z.B. Lichterketten, Muscheln und anderen Gegenständen geeignet ist. Durch diese Eigenschaften und ihre besondere Haptik schafft die erfindungsgemäß verwendete Bastelvergussmasse neue Aspekte hinsichtlich Spielfreudigkeit, Verarbeitbarkeit und dgl..

Durch den Einsatz gesundheitlich unbedenklicher Ausgangsprodukte ist es möglich, ein den erforderlichen Standards wie der Norm EN 71 "Sicherheit von Spielzeug", speziell der EN 71-3 (Migration bestimmter Elemente) und EN 71-5 (Chemisches Spielzeug ausgenommen Experimentierkästen) und CE-Standard entsprechendes Spielmaterial für Kinder bereit zu stellen, wobei eine Gesundheitsgefährdung auch bei oraler Aufnahme des vulkanisierten Reaktionsproduktes nicht eintreten kann. Vorteil der erfindungsgemäßen Bastelvergussmasse ist, dass sie in der Regel ohne Einwirkung von Wärme, somit also auch bereits bei Raumtemperatur oder geringer, aushärtet, und weichelastisch sowie lösungsmittelfrei ist. Die erfindungsgemäß verwendete Bastelvergussmasse sowie die A- und B-Komponenten sind aufgrund ihrer Zusammensetzung nicht kennzeichnungspflichtig (nach GefStoffV).

Durch das Vermischen der flüssigen A- und B-Komponenten entsteht eine Bastelvergussmasse, die weder umweltbelastend noch giftig ist und leicht an der Luft zu einem weichelastischen Zustand aushärtet bzw. vulkanisiert, d.h. aufgrund nicht unbedingt erforderlicher Wärmeeinwirkung auch energiegünstig ist. Da keine Energiezufuhr nötig ist, ist diese Bastelmasse auch sehr gut von Kindern einsetzbar, da heiße Herdplatten, heißes Wasser oder dgl. völlig vermieden werden können.

Zu den Vorteilen der erfindungsgemäß verwendeten Bastelvergussmasse treten auch noch ihre leichte und gefahrlose Verarbeitung, ihr hydrophobes Verhalten sowie ihre feuchtigkeitsabweisende Wirkung hinzu. Aus der vulkanisierten Masse hergestellte Formkörper sind wasserfest und wasserbeständig.

Neben den vorstehenden Eigenschaften zeichnet sich die erfindungsgemäß verwendete, ungiftige Masse auch durch ihre einfache Entsorgung aus.

Erfindungsgemäß hat es sich als vorteilhaft erwiesen, die A-Komponente und die B-Komponente in einem Mischungsverhältnis von A : B von im wesentlichen 1 : 1 einzusetzen. Dies hat den Vorteil, dass auch durch Kinder ohne komplizierte Wäge- und Messeinrichtungen die Verarbeitung, insbesondere das Vermischen, leicht erfolgen kann und somit auch der gewünschte Erfolg eintritt. Vorteilhafterweise ist eine der beiden Komponenten farblos transparent und die andere Komponente farbig, so dass die Durchmischung der Komponenten optisch kontrolliert werden kann.

Vorteilhafterweise ist eine Verarbeitungszeit von 15 bis 60 Minuten gegeben, bevor der Gelierprozess einsetzt; die vergossene Figur ist dann nach wenigen Stunden aus der Form herausnehmbar.

Die erfindungsgemäß verwendete Masse weist bei Raumtemperatur ausgezeichnete Verarbeitungseigenschaften auf. Beim miteinander Mischen der beschriebenen A- und B-Komponenten ergeben sich dabei gebrauchsfertige Bastelvergussmassen, die den an sie gestellten Forderungen wie leichte Verarbeitbarkeit, Wasser- und Speichelresistenz, inerte Reaktion gegenüber Metallen und Legierungen genügen und wegen fehlender umweltbelastender Stoffe umweltfreundlich und die Gesundheit nicht negativ beeinflussend sind.

Als für die Erfindung geeignete Streckmittel haben sich im wesentlichen in der Pharma-Industrie eingesetzte Öle gezeigt, die in der Regel die Viskositätsemiedrigung und somit die leichte Verarbeitbarkeit der erfindungsgemäßen A- und B-Komponenten gewährleisten. Dabei handelt es sich um sorgfältig ausraffinierte, niedrigviskose, umweltfreundliche und die Gesundheit nicht gefährdende Mineralöle, die mit den erfindungsgemäß eingesetzten funktionalisierten Ölen und Kautschukölen gut verträglich sowie oxidationsstabil und nicht hygroskopisch sind. Aus Kostengründen und zur Vereinfachung der Handhabbarkeit wird in der Regel sowohl in der A-Komponente als auch in der B-Komponente das identische Streckmittel eingesetzt.

Als für die Erfindung geeignete Füllstoffe haben sich im wesentlichen alle gängigen organischen und anorganischen Füllstoffmaterialien gezeigt. Als besonders geeignet haben sich Oxide, Hydroxide, basische Carbonate und Carbonate der Erdalkalimetalle gezeigt.

Die in der erfindungsgemäß verwendeten Bastelvergussmasse eingesetzten nicht kennzeichnungspflichtigen, funktionalisierten Öle der A-Komponente haben ein Molekulargewicht (Mn) in der Größenordnung von circa 150 bis 30.000. Vorzugsweise besitzt das eingesetzte funktionalisierte Öl primäre und/oder sekundäre Hydroxylgruppen. Beispiele hierfür sind handelsüblich erhältliche, flüssige Polyetherpolyole, Polyesterpolyole, Polyether-Esterpolyole, Rizinusöle, hydroxy-funktionalisierte Kohlenwasserstofföle oder Mischungen dieser Öle.

Als das Kautschuköl der B-Komponente werden vorzugsweise nicht kennzeichnungspflichtige, mit Carboxylgruppen modifizierte Kautschuköle eines Molekulargewichtes (Mn) von circa 500 bis 10.000 g/mol eingesetzt.

Für die Zwecke der Erfindung hat es sich als vorteilhaft erwiesen, dass die Masse die Mischung einer A-Komponente aus 0 bis 30 Gew.-% eines Streckmittels, 5 bis 100 Gew.-% eines funktionalisierten Öles als Bindemittel und ggf. 5 bis 65 Gew.-% eines Füllstoffes mit einer B-Komponente aus 0 bis 30 Gew.-% eines Streckmittels und 70 bis 100 Gew.-% eines funktionalisierten Kautschuköls ist. In einer besonders bevorzugten Ausführungsform ist die Masse die Mischung einer A-Komponente aus 5 bis 28 Gew.-%, insbesondere 8 bis 25 Gew.-% eines Streckmittels, 10 bis 95 Gew.-%, insbesondere 18 bis 92 Gew.-%, eines funktionalisierten Öles als Bindemittel, vorzugsweise eines hydroxylgruppenhaltigen Öls, und ggf. 10 bis 60 Gew.-%, insbesondere 15 bis 55 Gew.-%, eines Füllstoffes mit einer B-Komponente aus 5 bis 28 Gew.-%, insbesondere 7 bis 25 Gew.-%, eines Streckmittels und 72 bis 95 Gew.-%, insbesondere 75 bis 93 Gew.-%, eines funktionalisierten Kautschuköls, vorzugsweise ein carboxylgruppenhaltiges Kautschuköl.

Erfindungsgemäß können in geringen Mengen auch Vulkanisationsbeschleuniger wie nicht giftige organische Verbindungen der Haupt- oder Nebengruppenmetalle, nicht zur Bildung der gefährlichen Nitrosamine befähigte basische organische Stickstoffverbindungen, Phosphorverbindungen, Schwefel oder Schwefel enthaltende Verbindungen oder saure organische, gut öllösliche Reagenzien eingesetzt werden, die sich hervorragend als Katalysatoren bei Vulkanisationen eignen. Erfindungsgemäß können solche Vernetzer - falls sie eingesetzt werden - in einer Menge von 0,01 bis 10 Gew.-%, vorzugsweise 0,03 bis 7,5 Gew.-%, bezogen auf das Gesamtgewicht der Mischung, eingesetzt werden.

Um der erfindungsgemäß verwendeten Bastelvergussmasse eine den Erfordernissen genügende farbliche und somit spielerische Gestaltung verleihen zu können, hat es sich als vorteilhaft erwiesen, in der A- und/oder B-Komponente eine Farbpaste in einer Menge von 0,01 bis 5,0 Gew.-%, insbesondere 0,05 bis 4 Gew.-% des Gesamtgewichts der A- und/oder B-Komponenten einzusetzen. Diese Farbpaste sollte den Erfordernissen des CE-Standards entsprechen.

Die vorstehend genannte Bastelvergussmasse kann zusätzlich Stabilisatoren, oberflächenaktive Substanzen und/oder weitere Hilfsstoffe enthalten, die ebenfalls den Erfordernissen an ihre Kennzeichnungspflicht entsprechen, d.h. nicht kennzeichnungspflichtig und ungiftig sein sollen.

Die Bastelvergussmasse wird für Relief-Figuren- oder für 3D-Spielzeugfiguren verwendet, wobei im allgemeinen - ohne Zusatz von Farbpigmenten oder Füllstoffen - diese Massen transparent oder opak sind.

Relief-Figuren aus der erfindungsgemäß verwendeten Masse haften an allen glatten Flächen und können daher zur Dekoration von Fenstern, Kühlschränken, Badewannen, Fliesen und dgl. verwendet werden und lassen sich von diesen glatten Flächen rückstandslos wieder entfernen. Der dekorative Effekt kann nicht nur durch die Formgebung der Masse selbst sondern durch Eingießen von Gegenständen wie Muscheln, Münzen und dgl. erzielt werden.

3D-Figuren können hergestellt werden, indem mitgelieferte bzw. im Handel erhältliche 3D-Gießformen mit der Masse gefüllt und nach dem Aushärten der Masse entfernt werden. Auf diese Weise lassen sich weichelastische Figuren wie Dinosaurier, Autos und dgl. herstellen, die beim Herunterfallen, Werfen und/oder Darauftreten nicht kaputt gehen und dadurch und durch ihre Weichheit und Elastizität das Verletzungsrisiko herabsetzen bzw. fast vollständig ausschließen.

Die aus der Bastelvergussmasse hergestellten Relief- bzw. 3D-Figuren können von Kindern und/oder mit Hilfe von Erwachsenen zu Hause ohne jedes Problem in an sich bekannter Weise hergestellt werden, wobei die beiden Komponenten selber gemischt und in mitgelieferte bzw. im Bastelbedarf erhältliche Formen gegossen werden können. Aufgrund des Zusatzes von Farben ist ein einfarbiger und/oder mehrfarbiger Verguss möglich.

In die noch nicht ausgehärtete Masse kann ein beliebiges Gewebe aus Kunststoff, Textilien, Metall oder dgl. eingelegt oder eingearbeitet werden, dass es beim Aushärten der Masse so eingebettet wird, und auf diese Weise zum Beispiel Stofftiere, Kleidung, Rucksäcke und ähnliche Produkte mit weichelastischen Relief-Figuren dekoriert werden können. Durch die feste Verbindung mit Geweben und/oder Textilien können durch Verwendung entsprechender Formen oder Gegenstände auch spezielle Funktionen wie Anti-Rutsch-Noppen, Knie- und Ellbogenschützer oder dgl. erzielt werden.

Zusätzlich können die aus der Bastelvergussmasse hergestellten Erzeugnisse auf einfache Weise mit an sich bekannten Farben oder Lacken bemalt und/oder lackiert werden.

Die Verarbeitung der Bastelvergussmasse ist an sich bekannt und erfolgt vorteilhafterweise auch so, dass die vorstehend genannten A- und B-Komponenten in einem Behältnis in dem entsprechenden Mischungsverhältnis zusammengebracht und die nach dem Rühren erhaltene homogene Masse vergossen wird. Die Verarbeitungs- und Gelierzeit ist von wenigen Minuten bis zu einigen Stunden einstellbar. Vorteilhafterweise ist eine Verarbeitungszeit von 15 bis 60 Minuten gewählt, bevor der Gelierprozeß einsetzt, damit auch kleinere Kinder hinreichend Zeit haben, mit der Bastelvergussmasse zu spielen oder zu modellieren. Eine vergossene Figur ist dann nach wenigen Stunden aus der Form herausnehmbar. Das die gewünschten Eigenschaften aufweisende Endprodukt ist dabei im wesentlichen blasenfrei und kann - wie vorstehend beschrieben - auf einfache Weise noch farblich gestaltet werden.

Damit auch kleine Kinder ohne große Mess- und Wiegekenntnisse mit der Bastelvergussmasse spielen können, wird diesen ein Bastelkit zur Verfügung gestellt, der die bereits vorbereitete A- und B-Komponente in jeweils getrennten Behältern enthält, sowie Messvorrichtungen und Formen, die an die Spielwünsche wie 3-D-Figuren, Relieffiguren, Modell- und Spielzeugfiguren angepasst sind. Die Messvorrichtungen sind in der Regel Behälter unterschiedlichen Volumens, um das Messen der jeweiligen Mischverhältnisse zu vereinfachen, wobei zumindest 2 Behälter des gleichen Volumens vorliegen, um unterschiedliche Mengen Bastelvergussmasse zum Vergiessen auch grösserer Gegenstände zubereiten zu können bzw. gleiche und/oder unterschiedliche Mischverhältnisse der A- und B-Komponente.

Die Erfindung wird nachfolgend anhand von Beispielen näher erläutert, wobei in der Regel die nachfolgend aufgezählten handelsüblichen Substanzen verwendet werden:

### Bindemittel der A-Komponente:

Novares XK 039: hydroxylgruppenhaltiges Kohlenwasserstofföl, (Rütgers-VfT AG)
GURONIC® C400-0, Komponente A, hydroxylgruppenhaltiges Kohlenwasserstofföl (Paul Jordan GmbH)
GURONIC® B1N0, Komponente A, mineralisch gefülltes, hydroxylgruppenhaltiges Kohlenwasserstofföl (Paul Jordan GmbH)
Baygal ® K 115: Polyether-Esterpolyol (Bayer)
Sovermol® 815: Polyether-Esterpolyol (Henkel)

### Bindemittel der B-Komponente:

GURONIC® C400-0, Komponente B, carboxylgruppenhaltiges Kautschuköl (Paul Jordan GmbH)
GURONIC® B1, Komponente B, blau eingefärbte carboxylgruppenhaltige Kautschukölmischung (Paul Jordan GmbH)

### Streckmittel:

Tec 20, Cox Weißöl (DEA)

### Reaktionsbeschleuniger bzw. Vernetzer:

FOMREZ UL 28, (Witco GmbH)
N,N,N',N'-Tetramethylethylendiamin, (Merck)

### Farbstoffe:

Reactint ® Red X 52, Farbstoff (Milliken Chemical)
Moltopren ® Blaupaste BU 01 (Bayer)

### BEISPIELE:

### Beispiel 1:

Eine A-Komponente bestehend aus 50 Gew.-% Novares XK 039 und 50 Gew.-% GURONIC® C400-0 Komponente A wird mit einer B-Komponente bestehend aus GURONIC® C400-0 Komponente B im Gewichtsverhältnis von 1:1 vermischt. Die Mischung ist ca. 2 h vergießbar und vulkanisiert über Nacht bei Raumtemperatur zu einem weichelastischen, leicht klebrigen Endzustand.

### Beispiel 2:

Eine A-Komponente bestehend aus 80 Gew.-% GURONIC® C400-0 Komponente A und 20 Gew.-% Tec 20 wird mit einer B-Komponente bestehend aus 80 Gew.-% GURONIC® C400-0 Komponente B, 19,5 Gew.-% Tec 20 und 0,5 Gew.-% Moltopren® Blaupaste BU 01 im Gewichtsverhältnis von 1:1 vermischt. Die Mischung ist ca. 30 min. vergießbar und vulkanisiert über Nacht bei Raumtemperatur zu einem weichelastischen, leicht klebrigen Endzustand.

### Beispiel 3:

Eine A-Komponente bestehend aus GURONIC® B1N0 wird mit einer B-Komponente bestehend aus GURONIC® B1 im Gewichtsverhältnis von 1,3:1 vermischt. Die Mischung ist ca. 15 min. vergießbar und vulkanisiert bei Raumtemperatur innerhalb von ca. 8 h zu einem weichelastischen, leicht klebrigen Endzustand.

### Beispiel 4:

Eine A-Komponente bestehend aus 99 Gew.-% Sovermol® 815 und 1 Gew.-% FOMREZ UL 28 wird mit einer B-Komponente wie in Beispiel 3 im Gewichtsverhältnis von 1:1 vermischt. Die Mischung ist ca. 60 min. vergießbar und vulkanisiert über Nacht bei Raumtemperatur zu einem weichelastischen, leicht klebrigen Endzustand.

### Beispiel 5:

Eine A-Komponente bestehend aus 99,6 Gew.-% Baygal® K 115 und 0,4 Gew.-% N,N,N',N'-Tetramethylethylendiamin wird mit einer B-Komponente bestehend aus 99,6 Gew.-% GURONIC® C400-0 und 0,4 Gew.-% Reactint® Red X 52 im Gewichtsverhältnis von 1:1 vermischt. Die Mischung ist ca. 10 min. vergießbar und vulkanisiert bei Raumtemperatur innerhalb von ca. 5 h zu einem weichelastischen, leicht klebrigen Endzustand.

### Beispiel 6:

Eine frisch hergestellte Mischung der Massen gemäß den Beispielen 1 bis 5 wird in handelsübliche Figuren-Gießformen aus Polyethylen oder Polypropylen (z.B. von Eberhard Faber, No. 8748 02 oder Beverly Designs, Zoo piks®) vergossen. Die Figuren können nach den in den Beispielen 1 bis 5 angegebenen Vulkanisierzeiten problemlos und ohne Rückstände zu hinterlassen aus den Gießformen entnommen werden.

### Beispiel 7:

In eine gemäß Beispiel 6 gefüllte Form wird noch vor Ende der Verarbeitungszeit ein Textilmaterial so eingelegt, dass die in der Form befindliche Mischung in das Textilgewebe eindringen kann. Die Vulkanisation erfolgt dann derart, dass das Textilmaterial fest an der Figur haftet. Die Figuren können nach den in den Beispielen 1 bis 5 angegebenen Vulkanisierzeiten problemlos und ohne Rückstände zu hinterlassen aus den Gießformen entnommen werden.

## Patentansprüche

1. Verwendung einer weichelastisch aushärtenden, aus zwei Komponenten bestehenden Masse für Bastelzwecke für Relief-Figuren, Modell- und Spielzeugfiguren sowie als andere Spielgegenstände, wobei die Masse das Reaktionsprodukt einer in Wärme und/oder Kälte vernetzbaren A-Komponente aus einem funktionalisierten Öl als Bindemittel mit einer B-Komponente aus einem funktionalisierten Kautschuköl ist.

2. Verwendung nach Anspruch 1,
**dadurch gekennzeichnet, dass**
mindestens ein Streckmittel zugesetzt ist.

3. Verwendung nach Anspruch 1 oder Anspruch 2,
**dadurch gekennzeichnet, dass**
mindestens ein Füllstoff zugesetzt ist.

4. Verwendung nach einem der Ansprüche 1 bis 3,
**dadurch gekennzeichnet, dass**
das Mischungsverhältnis der A-Komponente zur B-Komponente im wesentlichen 1:1 ist.

5. Verwendung nach einem der Ansprüche 1 bis 4,
**dadurch gekennzeichnet, dass**
die Masse die Mischung einer A-Komponente aus 0 bis 30 Gew.-% eines Streckmittels, 5 bis 100 Gew.-% eines funktionalisierten Öles als Bindemittel und gg. 4 bis 65 Gew.-% eines Füllstoffes mit einer B-Komponente aus 0 bis 30 Gew.% eines Streckmittels und 70 bis 100 Gew.-% eines funktionalisierten Kautschuköls als Bindemittel ist.

6. Verwendung nach einem der Ansprüche 1 bis 5,
**dadurch gekennzeichnet, dass**
ein Vernetzer zugesetzt ist.

7. Verwendung nach einem der Ansprüche 1 bis 6,
**dadurch gekennzeichnet, dass**
der A-Komponente und/oder B-Komponente eine Farbpaste zugesetzt ist.

8. Verwendung nach einem der Ansprüche 1 bis 7,
**dadurch gekennzeichnet, dass**
Stabilisatoren, oberflächenaktive Substanzen und/oder weitere Hilfsstoffe zugesetzt sind.

9. Verwendung nach einem der Ansprüche 1 bis 8,
**dadurch gekennzeichnet, dass**
in die Masse Gewebe, Textilien und/oder Gegenstände eingearbeitet sind.

10. Bastelkit enthaltend eine Messvorrichtung sowie Formen, wobei die die Bastelmasse bildende A-Komponente und die B-Komponente nach einem des Ansprüche 1 bis 9 in 2 getrennten Behältern eingebracht sind.

## Claims

1. Use of a flexible curing two-component composition for craftwork purposes for relief figures, model figures and toy figures and for other toy articles, wherein the composition is the reaction product of a hot and/or cold-crosslinkable A-component consisting of a functionalised oil as binder with a B-component consisting of a functionalised rubber.

2. Use according to claim 1, **characterised in that** at least one extender is added.

3. Use according to either claim 1 or claim 2, **characterised in that** at least one filler is added.

4. Use according to any one of claims 1 to 3, **characterised in that** the mixing ratio of A-component to B-component is substantially 1:1.

5. Use according to any one of claims 1 to 4, **characterised in that** the composition is the mixture of an A-component consisting of from 0 to 30% by weight of an extender, from 5 to 100% by weight of a functionalised oil as binder and optionally from 4 to 65% by weight of a filler with a B-component consisting of from 0 to 30% by weight of an extender and from 70 to 100% by weight of a functionalised rubber as binder.

6. Use according to any one of claims 1 to 5, **characterised in that** a crosslinking agent is added.

7. Use according to any one of claims 1 to 6, **characterised in that** a coloured paste is added to the A-component and/or to the B-component.

8. Use according to any one of claims 1 to 7, **characterised in that** stabilisers, surface-active substances and/or other auxiliaries are added.

9. Use according to any one of claims 1 to 8, **characterised in that** woven fabric, textiles and/or articles are incorporated into the composition.

10. Craftwork kit containing a measuring instrument and moulds, wherein the A-component and the B-component forming the craftwork composition according to any one of claims 1 to 9 are introduced into two separate containers.

## Revendications

1. Utilisation d'une masse élastique et souple, durcissable, à deux composants, pour des objectifs de bricolage, pour produire des figurines en relief, des figurines-modèles et des figurines-jouets ainsi que d'autres jouets, la masse constituant le produit de réaction d'un composant A à réticulation par la chaleur et/ou le froid comprenant une huile fonctionnalisée comme liant et d'un composant B comprenant une huile de caoutchouc fonctionnalisée.

2. Utilisation selon la revendication 1, **caractérisée par** l'addition d'au moins un agent extenseur.

3. Utilisation selon les revendications 1 ou 2, **caractérisée par** l'utilisation d'au moins une charge.

4. Utilisation selon l'une des revendications 1 à 3, **caractérisée en ce que** le rapport de mélange du composant A et du composant B correspond pour l'essentiel à 1 : 1.

5. Utilisation selon l'une des revendications 1 à 4, **caractérisée en ce que** la masse est constituée par le mélange d'un composant A comprenant 0 à 30% en poids d'un agent extenseur, 5 à 100% en poids d'une huile fonctionnalisée comme liant et éventuellement 4 à 65% en poids d'une charge, avec un composant B comprenant 0 à 30% en poids d'un agent extenseur et 70 à 100% en poids d'une huile de caoutchouc fonctionnalisée comme liant.

6. Utilisation selon l'une des revendications 1 à 5, **caractérisée par** l'addition d'un agent de réticulation.

7. Utilisation selon l'une des revendications 1 à 6, **caractérisé par** l'addition d'une pâte de couleur au composant A et/ou au composant B.

8. Utilisation selon l'une des revendications 1 à 7, **caractérisée par** l'addition de stabilisateurs, de substances tensioactives et/ou d'autres substances auxiliaires.

9. Utilisation selon l'une des revendications 1 à 8, **caractérisée en ce que** des tissus, des textiles et/ou d'autres objets sont incorporés dans la masse.

10. Kit de bricolage comprenant un dispositif de mesure et des moules, le composant A et le composant B constituant la masse de bricolage selon l'une des revendications 1 à 9 étant contenus dans deux récipient séparés.
